# EUROPEAN PATENT APPLICATION

(11) **EP 4 502 539 A1**
(43) Date of publication of application: **05.02.2025**
(21) Application number: 23189784.4
(22) Date of filing: 04.08.2023
(51) Int. Cl.: G01C 21/20

(54) **A MARINE NAVIGATION SYSTEM**

(71) Applicant: Volvo Penta Corporation, 405 08 Göteborg (SE)
(72) Inventor: BERGENWALL, Jonatan, 431 37 Mölndal (SE); ANDRÉASSON, Filip, Mölndal (SE)
(74) Representative: Ström & Gulliksson AB

(57) **Abstract**

The disclosure relates to a marine navigation system for a marine vessel, comprising a positioning unit configured to detect a position of the marine vessel, a nautical chart database, a display being configured to present a view of a nautical chart information and a position of the marine vessel on the nautical chart, a short range distance sensor module arranged on the marine vessel, the short range distance sensor module being configured to provide scanned data of a surrounding environment of the marine vessel, a control unit being operatively connected with the short range distance sensor module, the positioning unit, the nautical chart database and the display, the control unit is configured to process the scanned data to provide a scanned view of the surrounding environment, wherein the control unit is configured to present an augmented view of the nautical chart and scanned data on the display, and wherein the control unit is configured to indicate portions of the scanned data which does not match the nautical chart information in the augmented view.

## Description

### TECHNICAL FIELD

The disclosure relates generally to marine navigation of a marine vessel. In particular aspects, the disclosure relates to a marine navigation system. The disclosure can be applied to any marine vessel such as commercial marine vessels, leisure craft, motor boats, and/or autonomous marine vessel. Although the disclosure may be described with respect to a particular marine vessel, the disclosure is not restricted to any particular marine vessel.

### BACKGROUND

When navigating and maneuvering a marine vessel the captain is relying on onboard navigation systems such as nautical charts and in person observations of the surroundings. However, during low visibility where in person observations are limited and other onboard navigation systems may not be accurate it may be difficult and uncertain to navigate and maneuver in close quarters.

### SUMMARY

According to a first aspect of the disclosure, a marine navigation system for a marine vessel, comprising
- a positioning unit configured to detect a position of the marine vessel,
- a nautical chart database,
- a display being configured to present a view of a nautical chart information and a position of the marine vessel on the nautical chart,
- a short range distance sensor module arranged on the marine vessel, the short range distance sensor module being configured to provide scanned data of a surrounding environment of the marine vessel,
- a control unit being operatively connected with the short range distance sensor module, the positioning unit, the nautical chart database and the display, the control unit is configured to process the scanned data to provide a scanned view of the surrounding environment, wherein the control unit is configured to present an augmented view of the nautical chart and
scanned data on the display, and
wherein the control unit is configured to indicate portions of the scanned data which does not match the nautical chart information in the augmented. The first aspect of the disclosure may seek to solve the disadvantages with the prior art and especially the navigation and maneuvering of the marine vessel in low visibility. A technical benefit may include providing real-time information about the surroundings of the marine vessel independently of visibility and at the same time present the information to the captain in an intuitive manner so that safer navigation and maneuvering of the marine vessel is obtained. By pairing the nautical chart with a high-precision real-time updating view of the marine vessel's surrounding environments in the augmented view, the captain can rely on a single information flow for any type of navigation, improving interpretation efficiency and reducing cognitive load.

Optionally in some examples, including in at least one preferred example, the control unit is configured to comparing the scanned view of scanned data with the nautical chart information and to identify portions of the scanned data being different to the nautical chart information so as to provide the augmented view of the nautical chart information including the scanned view. A technical benefit may include that the nautical chart information available from the nautical chart database is being compared to the scanned surroundings so that an augmented view may be presented to the captain.

Optionally in some examples, including in at least one preferred example, the scanned view is presented as a graphical overlay to the nautical chart information on the display. A technical benefit may include that the captain is presented with the information one place instead of multiple sources/displays wherefrom he/she has to combine the information. Hence, interpretation efficiency is enhanced and cognitive load for the captain is reduced.

Optionally in some examples, including in at least one preferred example, the graphical overlay provide information to an operator or captain regarding differences between the scanned view and the nautical chart information. A technical benefit may include that the captain/operator is presented with the differences and thereby the captain's interpretation of the surrounding environments is more efficient and thereby a safer navigation and maneuvering of the marine vessel is obtained.

Optionally in some examples, including in at least one preferred example, the scanned data is stored in a storage unit. A technical benefit may include that the scanned surroundings may be stored so that the scanned information is accessible for the control unit at all time, and that the control unit may compare new scanned data with the stored scanned data as well as the nautical chart information. The environment data interpreted from the scanned data may be stored in the storage unit with a position reference assigned to each scanned data.

Optionally in some examples, including in at least one preferred example, the control unit is configured to determine an object provided by the scanned data. A technical benefit may include that the control unit may identify what object there is scanned and thereby the control unit may graphically present the scanned object.

Optionally in some examples, including in at least one preferred example, an object database with known objects and/or classifications of scanned data points, the control unit is configured to compare the scanned data with the object database for determining an object substantially similar to the scanned data. A technical benefit may include enhancing the reliability of the system by the control unit is performing a comparison of the scanned data with the data of known objects in the object database. Hereby an expedient and fast segmentation is obtained.

Optionally in some examples, including in at least one preferred example, the control unit is configured to divide the scanned data into segmented objects, the control unit is configured to present the segmented objects graphically different on the display. A technical benefit may include that the system according to the disclosure may present different scanned objects with different graphically pattern, lines or design so that the operator/captain easily may identify these and especially objects being of particular interest.

Optionally in some examples, including in at least one preferred example, the augmented view is corrected by redrawing the overlay or by adding other geometrically indications and/or color. A technical benefit may include that the identification and/or detection of corrected objects in the augmented view is facilitated whereby the operator/captain may recognize areas and objects he/she needs to pay more attention to during navigation and maneuvering.

Optionally in some examples, including in at least one preferred example, the system collects scanned data over time as function of vessel position and orientation, and presents an averaged scanned view as overlay to the nautical chart. A technical benefit may include that the collected scanned data over time provide a more accurate detection of objects and their positions since the scanned data may establish the position and size of the objects in that it is scanned from different positions, headings and orientation of the marine vessel.

Optionally in some examples, including in at least one preferred example, the system compare the scanned data collected over time with the nautical chart information to identify the portions of the scanned data being continuously different to the nautical chart information. A technical benefit may include that the collected scanned data over time provide a more accurate detection of objects and their positions since the scanned data may establish the position and size of the objects in that it is scanned from different positions, headings and orientation of the marine vessel.

Optionally in some examples, including in at least one preferred example, the short range distance sensor module comprises one or more LiDAR sensor(s) and/or one or more short-range radar(s). A technical benefit may include applying reliable sensors and/or radars which are functional in a harsh marine environment, and which may provide information about the presence, position, and motion of objects in their respective detection areas.

Optionally in some examples, including in at least one preferred example, the short range distance sensor module comprises one or more LiDAR sensor(s), the LiDAR sensors are providing LiDAR scanned data. A technical benefit may include that the LiDAR sensors are capable of providing very high-resolution 3D point clouds, which means they can detect and measure the position and sizes of objects with great accuracy.

Optionally in some examples, including in at least one preferred example, the LiDAR scanned data is raw LiDAR data, the control unit is configured to translate the raw LiDAR data into a 2D grid map with probability and/or class values, the 2D grid map being the scanned view. A technical benefit may include translating the high-resolution raw LiDAR scanned data into a 2D grid map being more compact and requiring less data and thereby processor capability in processing of the LiDAR scanned data.

According to a second aspect of the disclosure, a marine vessel comprising a marine navigation system of any of the preceding claims. The second aspect of the disclosure may seek to the disadvantages with the prior art and especially the navigation and maneuvering of the marine vessel in low visibility. A technical benefit may include providing real-time information about the surrounding environments of the marine vessel independently of visibility and at the same time present the information to the captain in an intuitive manner so that safer navigation and maneuvering of the marine vessel is obtained. By pairing the nautical chart with a high-precision real-time updating view of the marine vessel's surrounding environments in the augmented view, the captain can rely on a single information flow for any type of navigation, improving interpretation efficiency and reducing cognitive load.

According to a third aspect of the disclosure, a marine navigation method comprising
- determining a position of a marine vessel,
- displaying a nautical chart information and the position of the marine vessel on the nautical chart,
- providing scanned data of a surrounding environment of the marine vessel by a short range distance sensor module arranged on the marine vessel,
- processing the scanned data to provide a scanned view of the surrounding environment,
- presenting an augmented view of the nautical chart and scanned data on the display, and
- indicating portions of the scanned data which does not match the nautical chart information in the augmented view. The third aspect of the disclosure may seek to the disadvantages with the prior art and especially the navigation and maneuvering of the marine vessel in low visibility. A technical benefit may include providing real-time information about the surrounding environments of the marine vessel independently of visibility and at the same time present the information to the captain in an intuitive manner so that safer navigation and maneuvering of the marine vessel is obtained. By pairing the nautical chart with a high-precision real-time updating view of the marine vessel's surrounding environments in the augmented view, the captain can rely on a single information flow for any type of navigation, improving interpretation efficiency and reducing cognitive load for the captain.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary marine navigation system according to an example.
**FIG. 2a** is an example of a nautical chart.
**FIG. 2b** is an example of a scanned view.
**FIG. 2c** is an example of an augmented view wherein the scanned view of **FIG. 2b** is presented as an overlay on the nautical chart of **FIG. 2a****.**
**FIG. 3a** is an example of an augmented view with an unreliable positioning signal of the positioning unit.
**FIG. 3b** is an example of the chart being matched to the scanned data.
**FIG. 4a** is an example of identifying a new coastline based on static scanned objects.
**FIG. 4b** is an example of redrawing the chart to match the scanned data of **FIG. 4a****.**
**FIG. 4c** is an example of a redrawn chart with the old chart's coastline highlighted.
**FIG. 4d** is an example of a redrawn chart with the old chart's coastline highlighted without displaying static scanned objects.
**FIG. 4e** is an example of a redrawn chart without displaying static scanned objects.
**FIG. 5** is an example of presenting an available docking spot in the augmented nautical charts.

### DETAILED DESCRIPTION

The detailed description set forth below provides information and examples of the disclosed technology with sufficient detail to enable those skilled in the art to practice the disclosure.

Different solutions exists in assisting a captain in navigating the marine vessel, for instance nautical charts being displayed on a display. Achieving and maintaining an accurate and reliable perception of the surrounding environment while captaining a marine vessel is a critical part of safe maneuvering. The primary source of information for a captain is to directly observe the surroundings of the marine vessel. However, in certain circumstances the captain may navigate and maneuver the marine vessel at low visibility wherein additional information proves helpful. Introducing additional information from different navigation sources about the surrounding area, position of the marine vessel, speed of the marine vessel, etc. to the captain will for sure assists them in building a perception of the surroundings and any obstacles and objects. However, each additional separate flow of information increases the cognitive load for captain and they often need to consult many different sources for the assistance in navigating the marine vessel during all visibility. An efficient interpretation of many different information flows is key for an effective navigation system that provides valuable assistance without excessive effort from the captain.

Nautical charts are the core information flow in helm systems with the assistance of a positioning unit. These are often connected so that the position of marine vessel is visible on the nautical chart, for instance on a display.

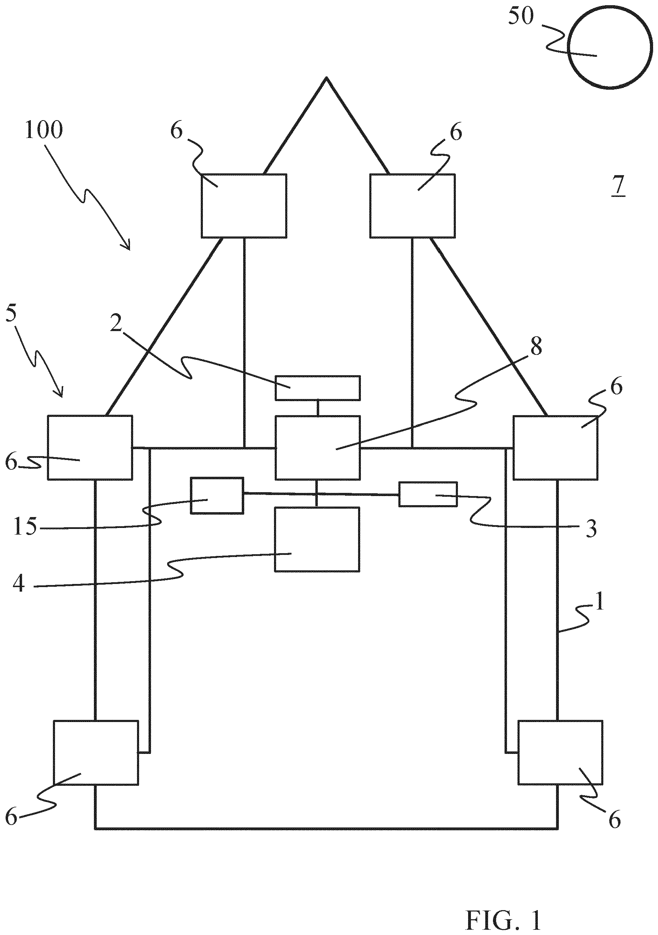

**FIG. 1** is an exemplary of a marine navigation system **100** according to an example. The marine navigation system **100** is arranged on a marine vessel **1.** The marine navigation system **100** comprises a positioning unit **2** configured to detect a position of the marine vessel **1.** The positioning unit may be a GPS (Global Positioning System), GNSS (Global Navigation Satellite System), INS (Inertial navigation system), or any combination thereof.

The marine navigation system **100** also comprises a nautical chart database **3** having different digital nautical charts of different areas and/or regions. The nautical chart database comprises different nautical chart information of the different nautical charts. In addition, the marine navigation system comprises a display **4** being configured to present a view of a nautical chart information and a position of the marine vessel **1** on the nautical chart.

Furthermore, a short range distance sensor module **5** arranged on the marine vessel **1,** the short range distance sensor module **5** being configured to provide scanned data of a surrounding environment **7** of the marine vessel **1.** In the example, the short range distance sensor module **5** comprises five short range sensors **6** arranged on the marine vessel **1.** The short range sensors 6 may be arranged so as to detect and scan in all directions of the marine vessel so that the entire surrounding environment **7** is scanned during sailing. In other examples, the short range distance sensor module **5** may comprise a different number of short range distance sensors.

The marine navigation system **100** also comprises a control unit **8** being operatively connected with the short range distance sensor module **5,** the positioning unit **2,** the nautical chart database **3** and the display **4,** the control unit **8** is configured to process the scanned data to provide a scanned view of the surrounding environment **7.** In addition, the control unit **8** is configured to present an augmented view of the nautical chart and scanned data on the display, and the control unit is also configured to indicate portions of the scanned data which does not match the nautical chart information in the augmented view. Hence, by combining the scanned data of the surrounding environment **7** with the nautical chart information an augmented view may be presented on the display. Combining the scanned data with the nautical chart allows for a more accessible flow of information in less screen area, in that all information may be presented in the augmented view on one display. In addition, captaining marine vessels with increasingly complex assistive technology can be a daunting task, given how many different systems are available and shall be observed during navigation and maneuvering. By the present disclosure and by augmenting the most conventional information system in marine vessels, the nautical chart, with the short range distance sensor module, the captain may be provided with a more accurate perception of their surrounding environment without any excessive effort. The known nautical charts excel at mapping the environment for navigating long distances but are unreliable when maneuvering close to the coast or docking, due to their lacking precision and update frequency. By pairing the nautical chart with a high-precision real-time updating view of the marine vessel's surroundings in an augmented combined view, the captain can rely on a single information flow for any type of navigation, improving interpretation efficiency and reducing cognitive load, and finally navigate safer than the known solutions.

Furthermore, the control unit **8** may be configured to compare the scanned view of scanned data with the nautical chart information and to identify portions of the scanned data being different to the nautical chart information so as to provide the augmented view of the nautical chart information including the scanned view.

Moreover, the scanned view may be presented as a graphical overlay to the nautical chart information on the display. Hereby the captain or operator may easily detect any difference between the scanned view and the nautical chart information. The graphical overlay may thereby provide information to an operator regarding differences between the scanned view and the nautical chart information.

In addition, the short range distance sensor module **5** may comprise one or more LiDAR sensor(s) **6** and/or one or more short-range radar(s) **6.** Both the LiDAR sensor and the short-range radar are sensing technologies, which may be used for object detection and distance measurement.

The LiDAR sensors uses laser beams to measure distances and create a detailed 3D map of the surrounding environment. It emits laser pulses and measures the time it takes for the pulses to bounce back after hitting objects. By calculating the time-of-flight of the laser pulses, LiDAR determines the distance to the objects. The LiDAR sensors are capable of providing very high-resolution 3D point clouds, which means they can detect and measure the position of objects with great accuracy. The LiDAR sensor can provide accurate object identification and recognition due to its high-resolution data

The short-range radar uses radio waves in the microwave frequency range. The short-range radar emit radio waves and measure the time it takes for the waves to reflect off objects. By analyzing the received signal, the radar can determine the distance, speed, and sometimes even the angle of detected objects. The short-range radar, especially those operating at for instance 76GHz or77GHz, are well-suited for detecting objects at longer ranges and in adverse weather conditions. They can detect the presence of obj ects, estimate their relative speed, and provide general information about their size and movement.

Either the LiDAR sensors may be used or the short-range radar may be used in the short range sensor module, however a combination of the two may be used as well. Other short range sensors being capable of detecting the surrounding environment may also be used.

As shown in **FIG. 1****,** the short range distance sensor module **5** may comprise one or more sensors **6** and/or radars being configured to preferably scan between 270 to 360 degrees around the marine vessel **1.** Furthermore, the one or more sensors **6** and/or radars may be configured to continuously scanning the surrounding environment and in combination with continuously positioning of the marine vessel **1** by means of the positioning unit.

The short range distance sensor module may also comprise at least one water LiDAR sensor arranged opposite the water for scanning a seafloor. The water LiDAR sensor is configured to emit greenlight. Hereby the seafloor is scanned while sailing so that a scanned view of the seafloor may be provided. The water LiDAR sensor may also detect objects on the seafloor, for instance large rocks or stones not visible on the nautical chart information.

The sensor and/or radar may be configured to scan at least 40 meter.

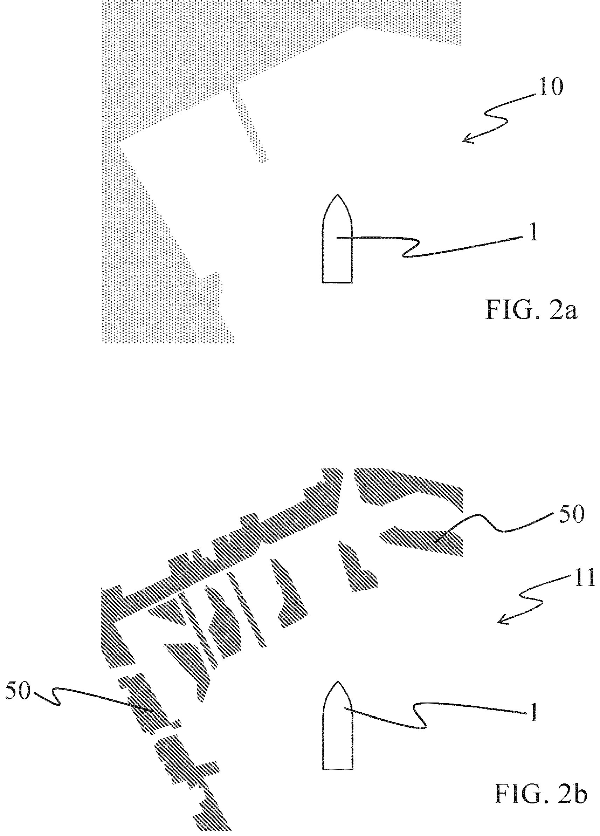

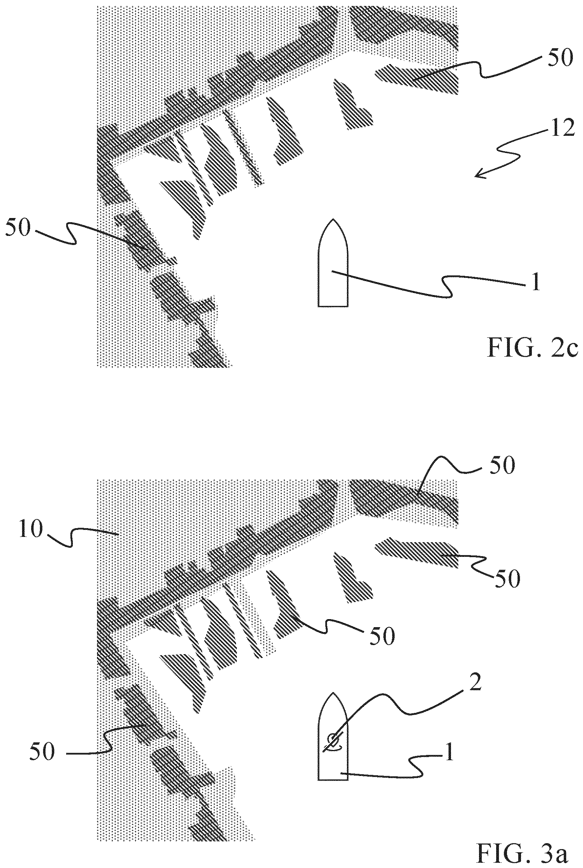

**FIGS. 2a to 2c** show an example of combining scanned data and a nautical chart. In **FIG. 2a****,** a nautical chart **10** is shown. The nautical chart **10** is displaying the marine vessel **1** in a chart surrounding based on the chart information and the positioning unit. In the example of **FIG. 2a****,** the marine vessel **1** is approaching a harbor with a shoreline and docking berths. The surroundings, i.e. the chart information, of the nautical chart **10** are in the shown example depicted as dotted elements. **FIG. 2b** discloses the scanned view **11** provided by the short range sensor module arranged on the marine vessel **1.** In the scanned view **11,** the different objects **50** being detected by the short range sensor module are presented. As seen in **FIG. 2b** the scanned view discloses additional details and objects compared to the nautical chart of **FIG. 2a****,** the elements of the scanned view are shown as hatched. In **FIG. 2c****,** the augmented view **12** is shown. The augmented view is the scanned view presented as an overlay on the nautical chart, combining the two systems in a shared view. The scanned data is presented in real-time to the captain or operator with for instance a contrasting color to allow the captain to easily differentiate between the two information sources. The scanned data is simply placed on top of the nautical chart, matching the heading of both data sources to merge the two interpreted environments together in an augmented view.

Furthermore, the scanned data may be stored in a storage unit **15.** The storage unit **15** may be configured to store the scanned data, the scanned view and/or the position of the marine vessel. The storage unit **15** may be a hard disc or similar being configured to store data. The storage unit **15** may be connected with the control unit **8.** The environment data interpreted from the scanned data may be stored in the storage unit **15** with a position reference assigned to each scanned data. The position reference may be provided by the positioning unit **2.**

The marine navigation system **100** may further comprise a navigation device or sensor such as a compass, a log, a speed log, gyroscope, depth sounder, AIS (Automatic Identification System), radar module, or any combination thereof, for further assisting in navigating and maneuvering the marine vessel **1.**

Furthermore, the control unit **8** may continuously be processing the scanned data and comparing it with the nautical chart information for continuously updating the augmented view. In addition, the control unit **8** may continuously be comparing the scanned data with the nautical chart information to determine when the scanned data is continuously different from the nautical chart information. Hence, the control unit **8** may be configured to validate a continuously difference between the scanned data and the nautical chart information, and based on the validated difference the control unit is configured to updating the augmented view accordingly so that the difference is visible for the operator.

Moreover, the control unit **8** may be configured to determine an object **50** provided by the scanned data. The determination of objects **50** may be performed by a segmentation method.

The marine navigation system **100** may further comprise an object database with known objects **50** and/or classifications of scanned data points, the control unit **8** is configured to compare the scanned data with the object database for determining an object substantially similar to the scanned data.

The object **50** may be a stationary object or a movable object. The object may be a coast line, shoreline, a buoy, a docking, a platform, a pier, a jetty, a ship, a vessel, a wreck, a construction, an equipment, a harbor unit, a rock or stone, wildlife, or similar. Hence, the object is something, which may be relevant for navigating and maneuvering the marine vessel, or may be of particular interest for the captain.

The control unit **8** is configured to determine if the scanned object is moving or stationary, and may label the object accordingly so that it is easily geographically deducible from the augmented view whether it is a moving object or a stationary object.

Also, the control unit may be configured to divide the scanned data into segmented objects, the control unit is configured to present the segmented objects graphically different on the display. As mentioned above, the control unit **8** may notify the captain about an object is belonging to the static or dynamic environment if identified by the system. In addition, the control unit **8** may specifically highlight objects that could be of interest to the captain. For example buoys, man overboard, wildlife, etc. It may also identify and update the position of user added objects/waypoints. For example, if a fisherman added buoys as points in a digital nautical chart, the control unit could allow them to directly tap the object in the augmented view to add it as a custom waypoint. If the buoy has moved when they return to check on it, the position of the waypoint could update to its new location.

In **FIG. 3a****,** an example of an augmented view with an unreliable positioning signal of the positioning unit **2** is shown. The marine vessel **1** has the positioning unit **2** and in certain circumstances, the positioning unit **2** provide an unreliable positioning signal. Hence, it may be difficult to maneuver and steer the marine vessel **1** in safe manner when the position unit **2** provide an unreliable positioning signal. By the present disclosure, the scanned data provide a real-time detection of the environment around the marine vessel **1** independent of the positioning signal. In **FIG. 3a****,** the scanned data is shown as an overlay to the nautical chart whereby the captain may detect that scanned data and thereby detected objects **50** are offset from the chart information of the nautical chart **10.** Hence, the captain is informed about that there may be an unreliable positioning signal by the positioning unit **2** and thereby a situation where handling of the marine vessel **1** is uncertain.

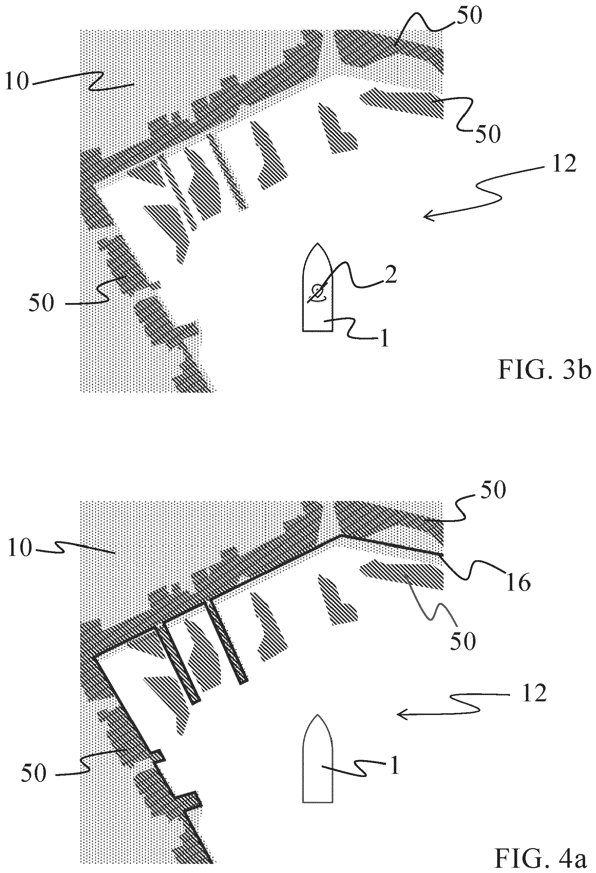

The captain may request the control unit to match the chart information of the nautical chart **10** to the scanned data, or the control unit may automatically match the nautical chart to the scanned data and thereby providing an accurate depiction of the surrounding in cases where the nautical chart's positioning is unreliable. The matching of the nautical chart **10** to the scanned data in an augmented view **12** is shown in **FIG. 3b****.** Accordingly, the captain may maneuver and steer the marine vessel **1** in a safe manner.

The augmented view may be corrected by redrawing the overlay or by adding other geometrically indications and/or color to the augmented view.

**FIG. 4a** is an example of identifying a new coastline **16** based on stationary scanned objects. The control unit is configured to detect and identify differences between the real-time detection and the chart information of the nautical chart **10.** In **FIG. 4a****,** the interpreted scanned data show that the coastline **16,** shown as a solid line, is slightly offset from the chart information of the nautical chart **10.** Hence, the control unit is in this example adding geometrically indication, i.e. the solid line **16,** to the augmented view **12,** so that the captain is informed about the difference. The scanned stationary objects **50** in the chart based on real-time sensor measurements, gradually redrawing the chart. The control unit may differentiate the scanned data, the original chart, and the updated chart, or blend them together.

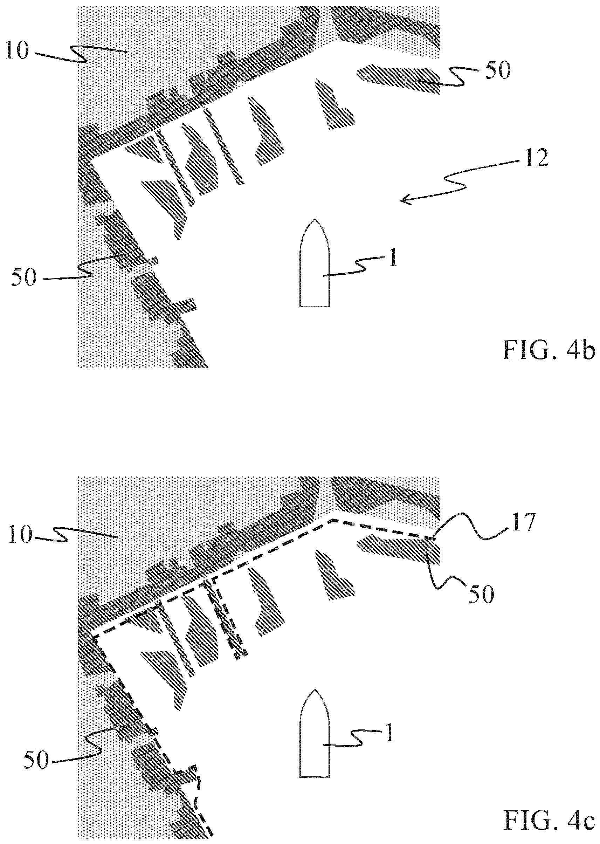

**FIG. 4b** is an example of redrawing the chart to match the scanned data of **FIG. 4a****.** The scanned stationary objects **50** in the chart based on real-time detection and the control unit may be configured to gradually redrawing the chart in the augmented view **12.** The control unit is configured to differentiate the scanned data, the chart information of the original nautical chart **10,** and the augmented view, or blend them together. In **FIG. 4b****,** the chart information of the nautical chart **10** is redrawn to match the new detected coastline.

**FIG. 4c** is an example of a redrawn chart with the old chart's coastline highlighted. The control unit has redrawn the nautical chart to match the new coastline as shown in **FIG. 4b****,** however, in **FIG. 4c** the control unit is identifying the old coastline, shown in the dotted line **17,** so that the captain may be observant to the changes in the original nautical chart **10** and the real-time detection of objects **50.**

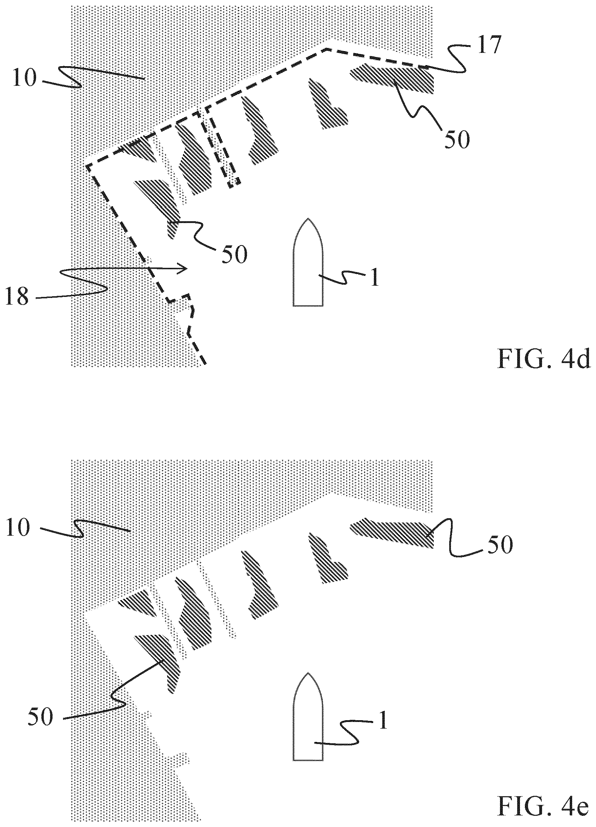

**FIG. 4d** is an example of a redrawn chart with the old chart's coastline **17** highlighted without displaying stationary scanned objects. Scanned movable objects **50** are shown. The movable objects may be vessels or boats present in the harbor **18.** **FIG. 4e** is an example of a redrawn chart without displaying the old coastline and the stationary scanned objects. The movable objects **50** are displayed.

Furthermore, the position of the marine vessel **1** and/or heading of the marine vessel **1** is/are continuously determined in view of the determined position of the scanned object, the control unit **8** may be configured to continuously comparing the position and/or heading of the marine vessel **1** in view of the determined position of the scanned object for determining if the determined position of the scanned object is maintained independently of the position and/or heading of the marine vessel **1,** then the scanned object is set to be a validated scanned object.

The system collects scanned data over time as function of the marine vessel's position and orientation, and presents an averaged scanned view as overlay to the nautical chart. In addition, the system may compare the scanned data collected over time with the nautical chart information to identify the portions of the scanned data being continuously different to the nautical chart information. Hence, to improve the long-term precision of the marine vessel's nautical chart, the nautical chart can be updated with the collected scanned data to for instance update the coastline and harbor docks for future reference as presented in the augmented view.

The marine navigation system **100** may further comprise a communication unit being configured to transmitting and/or receiving scanned data to and/or from a central storage unit. For instance, when the marine vessel is in harbor it may be connected with the central storage unit for exchanging scanned data. In an example, the central storage unit may be configured to receive scanned data from a plurality of marine vessels comprising the marine navigation system. Hence, a crowdsourcing of scanned data may be provided so as to collectively build an up-to-date and accurate cloud-based nautical chart system. By allowing multiple marine vessels with the same marine navigation system according to the present disclosure to share measurements and scanned data in a cloud-based storage unit or server may provide each captain with a nautical chart updated with crowdsourced information on the high-precision coastline and harbor measurements.

In addition, the scanned stationary objects may be updated in the augmented view based on real-time scanned data gradually by redrawing the augmented view. The control unit may be configured to differentiate the scanned data, the nautical chart, and the augmented view, or blend them together on the display as shown in **FIGS. 4a-4e****.** Furthermore, the heading of the marine vessel may be used for determining the direction to the scanned object together with the position of the marine vessel.

As mentioned, the short range distance sensor module **5** may comprise one or more LiDAR sensor(s) **6,** the LiDAR sensors are providing LiDAR scanned data. The LiDAR scanned data may be LiDAR point cloud dataset. The LiDAR point cloud dataset is a 3D scan, the control unit **8** may be configured to process the 3D scan for presenting it in a 2D view, the 2D view preferably being the scanned view.

Furthermore, the LiDAR scanned data may be raw LiDAR data, the control unit may be configured to translate the raw LiDAR data into a 2D grid map with probability and/or class values, the 2D grid map being the scanned view. By translating the high-resolution raw LiDAR scanned data into a 2D grid map being more compact it require less data and thereby processor capability in processing of the LiDAR scanned data.

The marine navigation system **100** may further comprise a photo imaging module providing images of the surrounding environments, the images may be processed and compared with the scanned data for validating the scanned object.

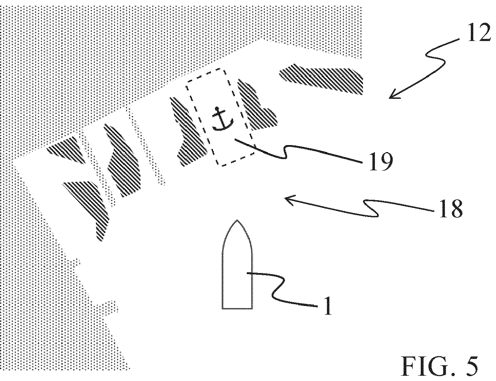

**FIG. 5** is an example of presenting an available docking spot **19** in the augmented nautical chart **12.** Hence, when the marine vessel **1** is approaching the harbor **18** the control unit is configured to identify available docking spots **19** based on the interpreted scanned data and to present these to the captain in the augmented view **12** for assisting the captain in finding a suitable docking spot and subsequently docking the marine vessel **1.**

The present disclosure also relates to a marine vessel **1** comprising a marine navigation system **100** as described above. The marine vessel **1** may be a commercial vessel, a leisure craft, or an autonomous marine vessel.

The present disclosure also relates to a marine navigation method comprising
- determining a position of a marine vessel **1,**
- displaying a nautical chart information and the position of the marine vessel **1** on the nautical chart,
- providing scanned data of a surrounding environment of the marine vessel **1** by a short range distance sensor module **5** arranged on the marine vessel **1,**
- processing the scanned data to provide a scanned view of the surrounding environment,
- presenting an augmented view of the nautical chart and scanned data on a display **4,** and
- indicating portions of the scanned data which does not match the nautical chart information in the augmented view.

Example 1: A marine navigation system for a marine vessel, comprising
- a positioning unit configured to detect a position of the marine vessel,
- a nautical chart database,
- a display being configured to present a view of a nautical chart information and a position of the marine vessel on the nautical chart,
- a short range distance sensor module arranged on the marine vessel, the short range distance sensor module being configured to provide scanned data of a surrounding environment of the marine vessel,
- a control unit being operatively connected with the short range distance sensor module, the positioning unit, the nautical chart database and the display, the control unit is configured to process the scanned data to provide a scanned view of the surrounding environment, wherein the control unit is configured to present an augmented view of the nautical chart and scanned data on the display, and
   wherein the control unit is configured to indicate portions of the scanned data which does not match the nautical chart information in the augmented view.

Example 2: The marine navigation system of Example 1, wherein the control unit is configured to comparing the scanned view of scanned data with the nautical chart information and to identify portions of the scanned data being different to the nautical chart information so as to provide the augmented view of the nautical chart information including the scanned view.

Example 3: The marine navigation system of Example 1 and/or 2, wherein the scanned view is presented as a graphical overlay to the nautical chart information on the display.

Example 4: The marine navigation system of Example 3, wherein the graphical overlay provide information to an operator or captain regarding differences between the scanned view and the nautical chart information.

Example 5: The marine navigation system of any of the preceding Examples, wherein the scanned data is stored in a storage unit.

Example 6: The marine navigation system of Example 5, wherein the storage unit is configured to store the scanned data, the scanned view and/or the position of the marine vessel.

Example 7: The marine navigation system of any of the preceding Examples, wherein the control unit is continuously processing the scanned data and comparing it with the nautical chart information for continuously updating the augmented view.

Example 8: The marine navigation system of any of the preceding Examples, wherein the control unit continuously compare the scanned data with the nautical chart information to determine when the scanned data is continuously different from the nautical chart information.

Example 9: The marine navigation system of any of the preceding Examples, wherein the control unit is configured to validate a continuous difference between the scanned data and the nautical chart information, and based on the validated difference the control unit is configured to updating the augmented view accordingly so that the difference is visible for the operator.

Example 10: The marine navigation system of any of the preceding Examples, wherein the control unit is configured to determine an object provided by the scanned data.

Example 11: The marine navigation system of claim 10, wherein the determination of objects is performed by a segmentation method.

Example 12: The marine navigation system of any of the preceding Examples, further comprising an object database with known objects and/or classifications of scanned data points, the control unit is configured to compare the scanned data with the object database for determining an object substantially similar to the scanned data.

Example 13: The marine navigation system of any of the preceding Examples, wherein the scanned data points are LiDAR points.

Example 14: The marine navigation system of any of the preceding Examples, wherein the object is a stationary object or a movable object.

Example 15: The marine navigation system of Example 14, wherein the control unit determine if the scanned object is moving or stationary.

Example 16: The marine navigation system of any of the preceding Examples, wherein the control unit is configured to divide the scanned data into segmented objects, the control unit is configured to present the segmented objects graphically different on the display.

Example 17: The marine navigation system of any of the preceding Examples, wherein a number of scanned data is necessary for validating the position and size of a scanned object.

Example 18: The marine navigation system of any of the preceding Examples, wherein the augmented view is corrected by redrawing the overlay or by adding other geometrically indications and/or color.

Example 19: The marine navigation system of any of the preceding Examples, wherein the position of the marine vessel and/or heading of the marine vessel is/are continuously determined in view of the determined position of the scanned object, the control unit is configured to continuous comparing the position and/or heading of the marine vessel in view of the determined position of the scanned object for determining if the determined position of the scanned object is maintained independently of the position and/or heading of the marine vessel, then the scanned object is set to be a validated scanned object.

Example 20: The marine navigation system of any of the preceding Examples, wherein the system collects scanned data over time as function of vessel position and orientation, and presents an averaged scanned view as overlay to the nautical chart.

Example 21: The marine navigation system of any of the preceding Examples, wherein the system compare the scanned data collected over time with the nautical chart information to identify the portions of the scanned data being continuous different to the nautical chart information.

Example 22: The marine navigation system of any of the preceding Examples, wherein the scanned stationary objects are updated in the augmented view based on real-time scanned data gradually by redrawing the augmented view.

Example 23: The marine navigation system of any of the preceding Examples, wherein the control unit is configured to differentiate the scanned data, the nautical chart, and the augmented view, or blend them together on the display.

Example 24 The marine navigation system of any of the preceding Examples, wherein the positioning unit is a GPS (Global Positioning System), GNSS (Global Navigation Satellite System), INS (Inertial navigation system), or any combination thereof.

Example 25: The marine navigation system of any of the preceding Examples, further comprising a navigation device or sensor such as a compass, a log, a speed log, gyroscope, depth sounder, AIS (Automatic Identification System), radar module, or any combination thereof.

Example 26: The marine navigation system of any of the preceding Examples, wherein the heading of the marine vessel is used for determining the direction to the scanned object together with the position of the vessel.

Example 27: The marine navigation system of any of the preceding Examples, wherein the object is a coast line, shoreline, a buoy, a docking, a platform, a pier, a jetty, a ship, a vessel, an equipment, a harbor unit, a rock or stone, or similar.

Example 28: The marine navigation system of any of the preceding Examples, wherein the short range distance sensor module comprises one or more LiDAR sensor(s) and/or one or more short-range radar(s).

Example 29: The marine navigation system of any of the preceding Examples, wherein the short range distance sensor module comprises one or more sensors and/or radars being configured to scan 360 degrees around the marine vessel.

Example 30: The marine navigation system of Example 29, wherein the one or more sensors and/or radars is/are configured to continuously scanning the surroundings and in combination with continuously positioning of the marine vessel.

Example 31: The marine navigation system of Example 1, wherein the short range distance sensor module comprises at least one water sensor being arranged opposite the water for scanning a seafloor.

Example 32: The marine navigation system of Example 31, wherein the water sensor is a water LiDAR sensor or a water SONAR sensor.

Example 33: The marine navigation system of Example 32, wherein the water LiDAR sensor is configured to emit greenlight.

Example 34: The marine navigation system of Example 32, wherein the water SONAR sensor is a 3D SONAR sensor.

Example 35: The marine navigation system of Example 29, wherein the sensor and/or radar is/are configured to scan at least 40 meter.

Example 36: The marine navigation system of any of the preceding Examples, wherein the short range distance sensor module comprises one or more LiDAR sensor(s), the LiDAR sensors are providing LiDAR scanned data.

Example 37: The marine navigation system of Example 36, wherein the LiDAR scanned data is LiDAR point cloud dataset.

Example 38: The marine navigation system of Example 37, wherein the LiDAR point cloud dataset is a 3D scan, the control unit is configured to process the 3D scan for presenting it in a 2D view, the 2D view preferably being the scanned view.

Example 39: The marine navigation system of Example 36, wherein the LiDAR scanned data is raw LiDAR data, the control unit is configured to translate the raw LiDAR data into a 2D grid map with probability and/or class values, the 2D grid map being the scanned view.

Example 40: The marine navigation system of any of the preceding Examples, further comprising a communication unit being configured to transmitting and/or receiving scanned data to and/or from a central storage unit.

Example 41: The marine navigation system of Example 40, wherein the central storage unit is configured to receive scanned data from a plurality of marine vessels comprising the marine navigation system.

Example 42: The marine navigation system of any of the preceding Examples, further comprising a photo imaging module providing images of the surrounding environments, the images are processed and compared with the scanned data for validating the scanned object.

Example 43: A marine vessel comprising a marine navigation system of any of the preceding Examples.

Example 44: The marine vessel of Example 43, wherein the marine vessel is a commercial vessel, a leisure craft, or an autonomous marine vessel.

Example 45: A marine navigation method comprising
- determining a position of a marine vessel,
- displaying a nautical chart information and the position of the marine vessel on the nautical chart,
- providing scanned data of a surrounding environment of the marine vessel by a short range distance sensor module arranged on the marine vessel,
- processing the scanned data to provide a scanned view of the surrounding environment,
- presenting an augmented view of the nautical chart and scanned data on the display, and
- indicating portions of the scanned data which does not match the nautical chart information in the augmented view.

Example 46: The marine navigation method of Example 45, further comprising
- comparing the scanned view of scanned data with the nautical chart information, and
- identifying portions of the scanned data being different to the nautical chart information so as to provide an augmented view of the nautical chart information including the scanned view.

Example 47: The marine navigation method of Example 45 and/or 46, further comprising presenting the scanned view as a graphically overlay to the nautical chart information on the display.

Example 48: The marine navigation method of Example 47, further comprising providing information on the graphically overlay to an operator regarding differences between the scanned view and the nautical chart information.

Example 49: The marine navigation method of any of the Examples 45 to 48, further comprising continuously processing the scanned data and comparing it with the nautical chart information for continuously updating the augmented view.

Example 50: The marine navigation method of any of the Examples 45 to 49, further comprising continuously comparing the scanned data with the nautical chart information to determine when the scanned data is continuously different from the nautical chart information.

Example 51: The marine navigation method of any of the Examples 45 to 50, further comprising validating a continuous difference between the scanned data and the nautical chart information, and based on the validated difference updating the augmented view accordingly so that the difference is visible for the operator.

Example 52: The marine navigation method of any of the Examples 45 to 51, further comprising determining an object provided by the scanned data.

Example 53: The marine navigation method of Example 52, whereby the determining of objects is performed by a segmentation method.

Example 54: The marine navigation method of any of the Examples 45 to 53, further comprising
- providing an object database with known objects and/or classifications of scanned data points,
- comparing the scanned data with the object database for determining an object substantially similar to the scanned data.

Example 55: The marine navigation method of any of the Examples 45 to 54, further comprising
- dividing the scanned data into segmented objects, and
- presenting the segmented objects graphically different on the display.

Example 56: The marine navigation method of any of the Examples 45 to 55, further collecting scanned data over time as function of vessel position and orientation, and presenting an averaged scanned view as overlay to the nautical chart.

Example 57: The marine navigation method of any of the Examples 45 to 56, further comprising comparing the scanned data collected over time with the nautical chart information to identify the portions of the scanned data being continuous different to the nautical chart information.

Example 58: The marine navigation method of any of the Examples 45 to 57, further comprising updating the scanned stationary objects in the augmented view based on real-time scanned data gradually by redrawing the augmented view.

Example 59: The marine navigation method of any of the Examples 45 to 58, further comprising differentiating the scanned data, the nautical chart, and the augmented view, or blending them together on the display.

Example 60: The marine navigation method of any of the Examples 45 to 59, further comprising
- providing a LiDAR point cloud dataset as a 3D scan, and
- processing the 3D scan for presenting it in a 2D view, the 2D view preferably being the scanned view.

Example 61: The marine navigation method of any of the Examples 45 to 59, further comprising
- providing a LiDAR scanned data as a raw LiDAR data, and
- translating the raw LiDAR data into a 2D grid map with probability and/or class values, the 2D grid map being the scanned view.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A marine navigation system (**100**) for a marine vessel (**1**), comprising
- a positioning unit (**2**) configured to detect a position of the marine vessel,
- a nautical chart database (**3**),
- a display (**4**) being configured to present a view of a nautical chart information and a position of the marine vessel on the nautical chart,
- a short range distance sensor module (**5**) arranged on the marine vessel (**1**), the short range distance sensor module being configured to provide scanned data of a surrounding environment (**7**) of the marine vessel,
- a control unit (**8**) being operatively connected with the short range distance sensor module (**5**), the positioning unit (**2**), the nautical chart database (**3**) and the display (**4**), the control unit (**8**) is configured to process the scanned data to provide a scanned view of the surrounding environment,
wherein the control unit (**8**) is configured to present an augmented view of the nautical chart and scanned data on the display (**4**), and
wherein the control unit (**8**) is configured to indicate portions of the scanned data which does not match the nautical chart information in the augmented view.

2. The marine navigation system (**100**) of claim 1, wherein the scanned view is presented as a graphical overlay to the nautical chart information on the display (**4**).

3. The marine navigation system (**100**) of claim 2, wherein the graphical overlay provide information to an operator or captain regarding differences between the scanned view and the nautical chart information.

4. The marine navigation system (**100**) of any of the preceding claims, wherein the scanned data is stored in a storage unit (**15**).

5. The marine navigation system (**100**) of any of the preceding claims, wherein the control unit (**8**) is configured to determine an object (**50**) provided by the scanned data.

6. The marine navigation system (**100**) of any of the preceding claims, further comprising an object database with known objects and/or classifications of scanned data points, the control unit (**8**) is configured to compare the scanned data with the object database for determining an object substantially similar to the scanned data.

7. The marine navigation system (**100**) of any of the preceding claims, wherein the control unit (**8**) is configured to divide the scanned data into segmented objects, the control unit is configured to present the segmented objects graphically different on the display (**4**).

8. The marine navigation system (**100**) of any of the preceding claims, wherein the augmented view is corrected by redrawing the overlay or by adding other geometrically indications and/or color.

9. The marine navigation system (**100**) of any of the preceding claims, wherein the system collects scanned data over time as function of the marine vessel's position and orientation, and presents an averaged scanned view as overlay to the nautical chart.

10. The marine navigation system (**100**) of any of the preceding claims, wherein the system compare the scanned data collected over time with the nautical chart information to identify the portions of the scanned data being continuously different to the nautical chart information.

11. The marine navigation system (**100**) of any of the preceding claims, wherein the short range distance sensor module (**5**) comprises one or more LiDAR sensor(s) (6) and/or one or more short-range radar(s) (**6**).

12. The marine navigation system (**100**) of any of the preceding claims, wherein the short range distance sensor module (**5**) comprises one or more LiDAR sensor(s) (**6**), the LiDAR sensors are providing LiDAR scanned data.

13. The marine navigation system (**100**) of claim 12, wherein the LiDAR scanned data is raw LiDAR data, the control unit (**8**) is configured to translate the raw LiDAR data into a 2D grid map with probability and/or class values, the 2D grid map being the scanned view.

14. A marine vessel (**1**) comprising a marine navigation system (**100**) of any of the preceding claims.

15. A marine navigation method comprising
- determining a position of a marine vessel (**1**),
- displaying a nautical chart information and the position of the marine vessel on the nautical chart,
- providing scanned data of a surrounding environment (**7**) of the marine vessel (**1**) by a short range distance sensor module (**5**) arranged on the marine vessel,
- processing the scanned data to provide a scanned view of the surrounding environment (**7**),
- presenting an augmented view of the nautical chart and scanned data on a display (**4**), and
- indicating portions of the scanned data which does not match the nautical chart information in the augmented view.
